# EUROPEAN PATENT SPECIFICATION

(11) **EP 0 876 973 B1**
(45) Date of publication and mention of the grant of the patent: **09.07.2003**
(21) Application number: 98108288.6
(22) Date of filing: 07.05.1998
(51) Int. Cl.: B65G 47/82

(54) **Lehr loader with enclosed actuators**
Ofenbeschicker mit vom einem Gehäuse umgebenen Antrieben
Chargeur de four avec moyens d'entrainement cartérisés

(30) Priority: 08.05.1997 US 854042; 16.09.1997 US 931720
(43) Date of publication of application: 11.11.1998
(60) Divisional application: 00120802.4
(73) Proprietor: OWENS-BROCKWAY GLASS CONTAINER INC., Toledo, Ohio 43666 (US)
(72) Inventor: Leidy, Wayne D., Perrysburg, OH 43551 (US); DiFrank, Frank J., Toledo, OH 43606 (US); Warnecke, Ronald P., Danville, VA 24541 (US)
(74) Representative: Blumbach, Kramer & Partner GbR

(56) References cited:
- EP-A- 0 708 266
- GB-A- 2 174 667
- US-A- 4 500 805
- US-A- 4 660 711
- US-A- 5 044 488

## Description

### FIELD OF THE INVENTION

This invention relates to a transfer device for transferring articles disposed in a linear array on a conveyor transversely of the conveyor into an article processing unit. More particularly, this invention relates to a transfer device of the foregoing character for transferring freshly formed glass containers to the upper horizontal surface of a moving conveyor of an annealing lehr, namely, a type of transfer device often called a lehr loader or a stacker.

### DESCRIPTION OF THE PRIOR ART

A transferring apparatus of the kind referred-to above is known from U.S. Patent 5,044,488 (Bolin) which discloses a lehr loader or stacker having a vertical series of driven carriages, the lowermost of which is supported by a support structure at an elevation above the floor of the plant in which the lehr loader is installed. The lowermost carriage is movable toward an adjacent annealing lehr to advance a linear series of glass containers on a conveyor, described in the reference as a cross-conveyor, positioned between the stacker and the lehr, transversely of the cross-conveyor into the lehr. An intermediate carriage is mounted on the lowermost carriage. The intermediate carriage is movable with the lowermost carriage toward and away from the lehr and is independently movable with respect to the lowermost carriage in a direction parallel to the direction of movement of the cross-conveyor to keep new containers on the cross-conveyor from piling up against a pusher bar carried by a third carriage during the motion of the lowermost carriage toward the lehr. The third carriage, which is the uppermost carriage in the series, is mounted above the intermediate carriage and is movable with the lowermost carriage and the intermediate carriage and is movable in a vertical direction independently of the intermediate carriage and the lowermost carriage to elevate the pusher bar above the tops of incoming containers on the cross-conveyor during the return of the pusher bar to a start position. The motion of each of the carriages of the stacker of the aforesaid U.S. Patent 5,044,488 is actuated by an axially fixed, rotatable screw drive carried by the underlying carriage, or the support structure in the case of the drive for the lowermost carriage, and the rotatable screw is rotatable in a nut that is fixed to the driven carriage.

The carriage drives with rotating screw of a stacker according to the aforesaid U.S. Patent 5,044,488 have many operating advantages over other lehr loader carriage drive techniques, such as hydraulic or pneumatic cylinders or motors, in that rotating screw drives have higher starting torques and are less jerky and more controllable in their motions. Unfortunately, the environment of a glass container manufacturing facility is quite hostile to rotating screw drives of the type described in the aforesaid U.S. Patent 5,044,488, due to dust or other particles that may contaminate the nut contacting surfaces of the rotatable screws, or the tendency of the rotatable screws to sling lubricant outwardly when rotating at the speeds of rotation needed for proper operation of a lehr loader, and/or the high temperatures that are inherently present in the operation of a lehr loader. Because of such problems, the inventor of the aforesaid U.S. Patent 5,044,488 subsequently patented a lehr loader that substituted endless belt drives for the rotatable screw drives of the aforesaid U.S. Patent 5,044,488, as is shown in U.S. Patent 5,472,077 (Bolin), though electromechanical linear actuatory comprising a lead screw of the ball type ware pre-known (see US-A 4,500,805).

However, the use of endless drives to drive the carriages of a lehr loader introduces other problems into the operation of a lehr loader, such as the inherent low starting torques of such drives and problems encountered in accurately controlling the positions of the movable carriages due to the stretching of belts in a belt-driven system or the backlash between chains and drive sprockets in a chain-driven system.

The pusher bar support of a lehr loader of the type described is quite long and is subject to a high temperature environment due to its proximity to freshly formed glass containers, which still retain a high degree of the heat required for their molding from gobs of molten glass, and to its proximity to the inlet end of an annealing lehr, which must be operated at an elevated temperature to properly anneal the containers. For example, the typical lehr loader pusher bar support operates in an environment where the temperature often reaches at least 190°C (400°F) and in some instances up to approximate 523°C (1000°F). If the pusher bar support is not continuously cooled during its operation, it is subject to warpage or other forms of thermal distortion.

### SUMMARY OF THE INVENTION

It is an object of the present invention to provide an apparatus for transferring articles in a hot environment that may also include dust or other particles.

This problem is solved by a transfer apparatus with the features of claim 1. In a preferred embodiment, the reciprocating motion of each of three superimposed movable carriages is actuated by an axially fixed, rotatable screw that rotates in a nut, which drives a spaced apart pair of parallel drive rods. The rotatable screw and nut are enclosed within a housing, and the drive rods extend from the housing, through appropriate seals to maintain lubricant within the housing and prevent dirt or other debris from entering into the housing. The housing for each rotatable screw and drive nut assembly is secured to the underlying carriage, or to the support structure in the case of the drive assembly for the lowermost movable carriage, and the free ends of the drive rods are secured to the overlying movable carriage.

The use of enclosed rotatable screw and drive nut assemblies in moving the movable carriages of a lehr loader according to the present invention makes it possible to achieve the gentle handling and cycle controllability advantages that where envisioned for the open ball screw and nut drive assemblies according to the aforesaid U.S. Patent 5,044,488, while avoiding the problems of lubricant and contamination of the ball screw surfaces and other maintenance problems that were encountered in the operation of devices according to the aforesaid U.S. Patent 5,044,488, as were recognized in the aforesaid U.S . Patent 5,472,077, which was subsequently granted in the name of the same inventor.

For a further understanding of the present invention and the objects thereof, attention is directed to the drawing and the follow brief description thereof, to the detailed description of the preferred embodiment of the invention and to the appended claims.

### BRIEF DESCRIPTION OF THE DRAWING.

- FIG. 1: is a fragmentary, perspective view of a lehr loader according to the preferred embodiment of the present invention;
- FIG. 2: is a front elevational view of the lehr loader of FIG. 1;
- FIG. 3: is a side elevational view of the lehr loader of FIGS. 1 and 2;
- FIG. 4: is a sectional view taken on line 4-4 of FIG. 2;
- FIG. 5: is a fragmentary elevational view at an enlarged scale, of a portion of the lehr loader of FIGS. 1-4;
- FIG. 6: is a front elevational view, at an enlarged scale, of a portion of the lehr loader of FIGS. 1-5;
- FIG. 7: is a side elevational view, at an enlarged scale, of a portion of the lehr loader of FIGS. 1-5;
- FIG. 8: is a sectional view, at an enlarged scale, taken on line 8-8 of FIG. 6;
- FIG. 9: is a section view taken on line 9-9 of FIG. 7;
- FIG. 10: is a plan view, partly in cross-section and at an enlarged scale, of an actuation device used in the lehr loader of FIGs. 1-5;
- FIGs. 11 and 12: are elevational views, partly in cross-section, at an enlarged scale and at right angles to one another of another actuation device used in the lehr loader of FIGs. 1-5;
- FIG. 13: is an elevational view, partly in cross-section, of an alternative embodiment of an actuation device for use in the lehr loader of FIGs. 1-5;
- FIG. 14: is a sectional view taken on line 14-14 of FIG. 13;
- FIG. 15: is a sectional view taken on line 15-15 of FIG. 2 ; and
- Fig. 16.: is a vertical sectional view, partly schematic, of a pusher bar support.

### DETAILED DESCRIPTION OF THE PREFERRED EMBODIMENT

A lehr loader according to the present invention is generally indicated in the drawing by reference numeral 20. The lehr loader 20 includes a frame 22, which is made up of vertically extending legs 24, 26, 28, 30, and the legs 24, 26, 28, 30 are disposed in a rectangular array. The legs 24, 26 are joined to one another by transversely extending members 32, 34, the legs 28, 30 are joined to one another by transversely extending members 36, 38, the legs 24, 28 are joined to one another by longitudinally extending members 40, 42, and the legs 26, 30 are joined together by longitudinally extending members, not shown.

The frame 22 is provided with a spaced apart pair of longitudinally extending slides 44, 46, and a generally rectangular carriage 48 is slidably mounted on the slides 44, 46. The carriage 48 is caused to reciprocate on the frame 22, toward and away from an annealing lehr L or other processing unit, by a reversible linear actuator 50 that is driven by a reversible a.c. servo motor 52 mounted in alignment with the actuator 50.

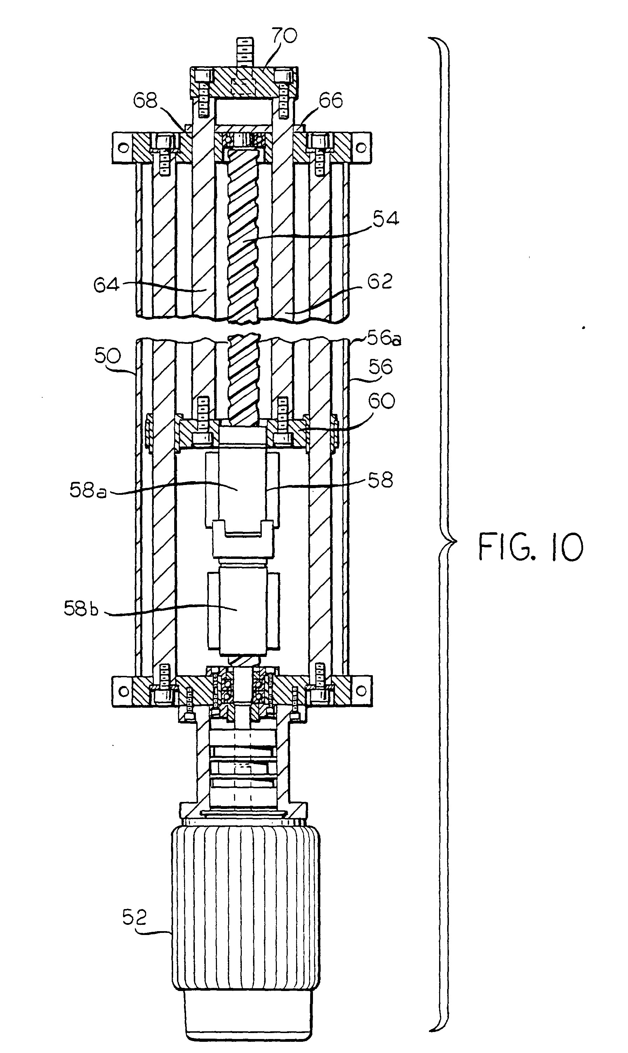

FIG. 10 illustrates a linear actuator 50 for use in the practice of the present invention, with the servo motor 52 secured thereto in axial alignment therewith, and in that case the linear actuator 50 is a ball screw mechanism with a reversible rotatable screw 54. The rotatable screw 54 is enclosed within an internally lubricated housing 56 that is secured to the frame 22, and the rotatable screw 54 rotates within a nut 58. Preferably, the nut 58 is made up of an opposed pair of nuts 58a, 58b to minimize backlash between the nut 58 and the rotatable screw. In any case, rotation of the screw 54 causes the nut 58 to advance or retract relative to the position of the servo motor 52, depending upon the direction of rotation of the screw 54.

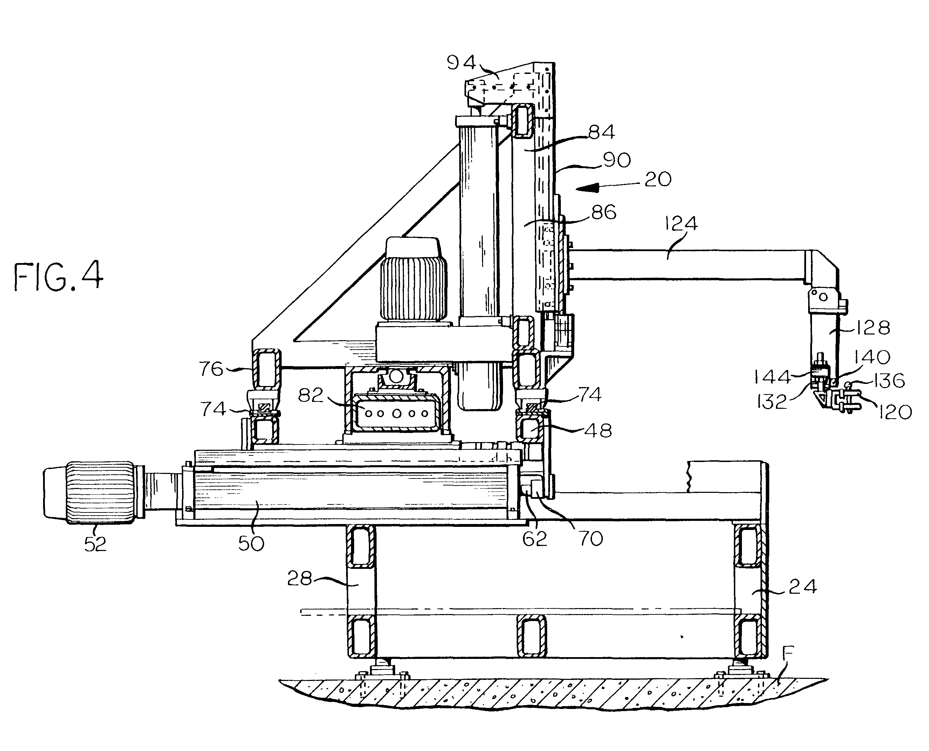

The nut 58 has a plate 60 secured to it, and the inner ends of a spaced apart pair of long, slender rods 62, 64 are secured to the plate 60. The outer ends of the rods 62, 64 extend beyond the housing 56 of the linear actuator 50 at all positions of the nut 58 within the housing 56, seals 66, 68 being provided in the housing 56 to sealingly accommodate the sliding motion of the rods 62, 64 with respect to the housing 56, respectively. The outer ends of the rods 62, 64 are secured to a plate 70, and the plate 70, in turn, is secured to the carriage 48, as shown in FIG. 4. Thus, reciprocation of the nut 58, as heretofore described, will cause the carriage 48 to reciprocate in a horizontal plane, toward or away from the lehr L. The use of the rods 62, 64 to longitudinally separate the nut 58 from the carriage 48 by the length of the rods 62, 64 desirably permits some degree of misalignment between the nut 58 and the carriage 48 due to the inherent flexibility of the rods 62, 64.

The linear actuator 50 of the enclosed ball screw type, as heretofore described, is available from E Drive Design, Inc. of Glastonbury, Connecticut, and has many advantages over an open ball screw linear actuator for use in reciprocating a carriage of a lehr loader, for example, an open ball screw linear actuator of the type disclosed in the aforesaid U.S. Patent 5,044,488. Specifically, an enclosed ball screw mechanism permits continuous lubrication of the mating surfaces of the rotatable screw 54 and the nut 58, notwithstanding the tendency of the rotating screw 54 to sling lubricant outwardly therefrom due to centrifugal force when rotating at high speed, the housing 56 that encloses the screw 54 and the nut 58 protects their mating surfaces from contamination due to dust and debris that can be present in an industrial environment such as a glass container manufacturing plant, and the housing 56, together with the circulation of lubricant therethrough, protects the screw 54 and the nut 58 from overheating in an environment where they would otherwise be exposed to heat from proximity to heated containers and the inlet to the lehr L. Preferably, the housing 56 has an outer radiation shield 56a positioned therearound and spaced therefrom to reduce the transfer of heat to the interior of the linear actuator 50.

A linear actuator of the enclosed ball screw type is disclosed in U.S. Patent 4,500,805 (Swanson).

The carriage 48 is provided with a spaced apart pair of laterally extending slides 72, 74 and a carriage 76 is slidably mounted on the slides 72, 74. The carriage 76 reciprocates in a longitudinal direction with the carriage 48 and is caused to reciprocate in a lateral direction with respect to the carriage 48, from side to side of the annealing lehr L, by a reversible linear actuator 78 that is driven by a reversible a.c. servo motor. The linear actuator 78 preferably is an enclosed ball screw mechanism of the type described above with respect to the linear actuator 50, and has a housing 82 that is secured to the carriage 48 and a nut (not shown) that reciprocates within the housing 82 and transmits reciprocating force to a spaced apart location of the carriage 76 by a pair of long slender rods 84, 86 whose free ends extend beyond the housing 82.

The carriage 76 has a vertically extending portion 86 that is made up of a frame with a pair of spaced apart vertically extending members 84, 88, and the vertically extending members 86, 88 are provided with vertically extending slides 90, 92, respectively. A vertically extending carriage 94 is slidably mounted on the slides 90, 92 of the carriage 76 to be movable in a vertical plane with respect to the carriage 76 as the carriage 76 is movable laterally in a horizontal plane with respect to the carriage 48 and as the carriage 76 is movable longitudinally in a horizontal plane with the carriage 48. The carriage 94 is caused to reciprocate in a vertical plane, for reasons that will later be discussed more fully, by a reversible linear actuator 96 that is driven by a reversible a.c. servo motor 98.

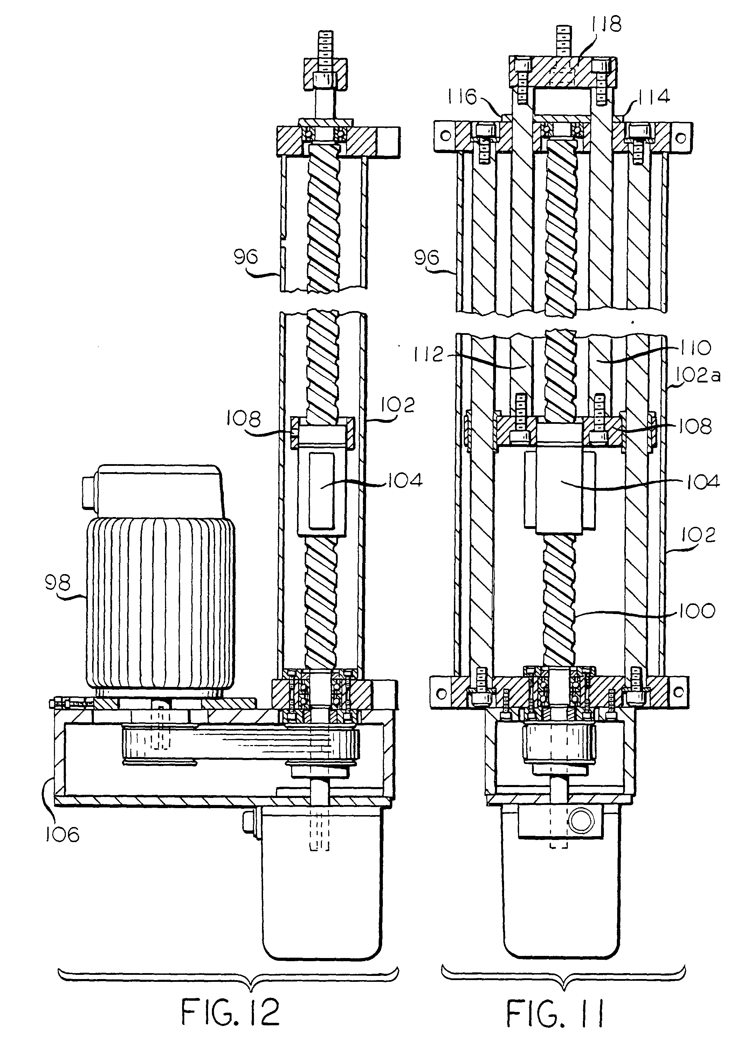

FIGs. 11 and 12 illustrate a linear actuator 96 for use in the practice of the present invention, with the servo motor 98 positioned out of alignment with the linear actuator 96 and parallel thereto to thereby reduce the overall height of the lehr loader 20. The linear actuator 96 is an enclosed ball screw mechanism with a reversible rotatable screw 100. The screw 100 is enclosed within an internally lubricated housing 102 that is secured to the vertically extended portion 86 of the carriage 76, and the rotatable screw 100 rotates within a nut 104. The rotation of the screw 100, thus, causes the nut 104 to advance or retract relative to the servo motor 98 depending upon the direction of rotation of the servo motor 98, whose torque is applied to the screw 100 by means of an enclosed drive assembly 106, such as a cogged timing belt drive assembly. Preferably, the housing 102 has an outer radiation shield 102a positioned therearound and spaced therefrom to reduce the transfer of heat to the interior of the linear actuator 96.

The nut 104 has a plate 108 secured to it, and the inner ends of a spaced apart pair of parallel, long slender rods 110, 112 are secured to the plate 108. The outer ends of the rods 110, 112 extend beyond the housing 102 of the linear actuator 96 at all positions of the nut 104 within the housing 102, seals 114, 116 being provided in the housing 102 to sealing accommodate the sliding motion of the rods 110, 112 with respect to the housing 102, respectively.

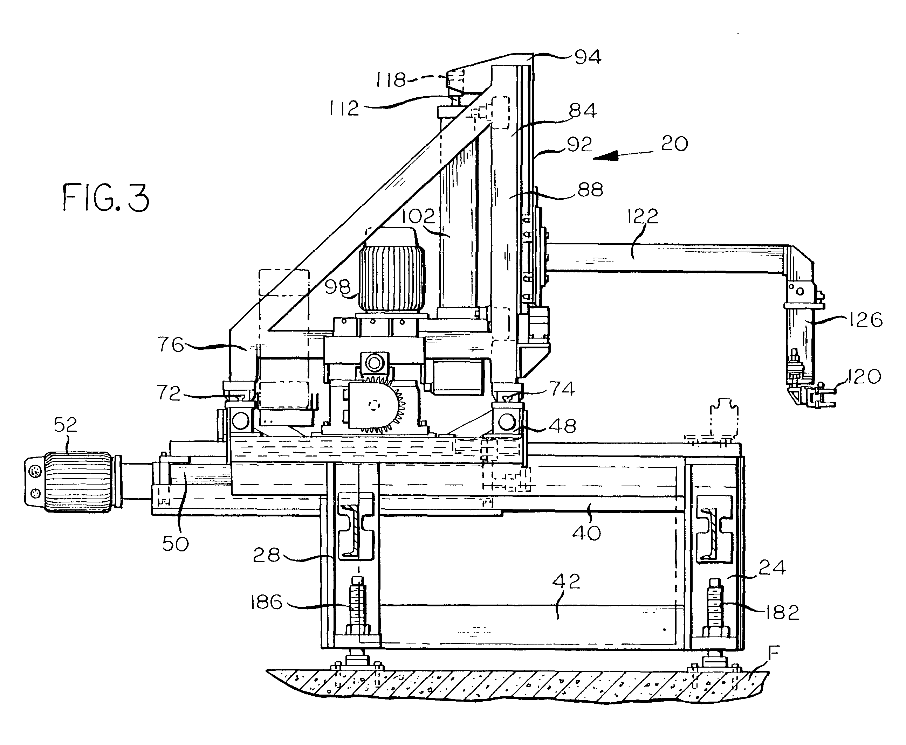

The other ends of the rods 110, 112 are secured to a plate 118, and the plate 118, in turn, is secured to the carriage 94, as shown in FIG. 3. Thus, reciprocation of the nut 104, as heretofore described, will cause the carriage 94 to reciprocate in a vertical plane. The use of the rods 110, 112 to longitudinally separate the nut 104 from its attachment to the carriage 94 by the lengths of the rods 110, 112 desirably permits some degree of misalignment between the nut 104 and the carriage 94 due to the inherent flexibility of the rods 110, 112. A linear actuator 96 of the enclosed ball screw type, as described above, like the linear actuators 50, 78, as heretofore described, is available from E Drive Design, Inc. of Glastonbury, Connecticut and has the functional advantages over an open ball screw linear actuator that were previously described specifically in reference to the linear actuator 50.

The carriage 94 has a laterally extending pusher bar 120 attached thereto, a pair of spaced apart, longitudinally extending beams 122, 124 with beams 126, 128 extending downwardly therefrom, respectively, being provided to properly position the pusher bar 120 with respect to the lehr L for the intended operation of the pusher bar 120.

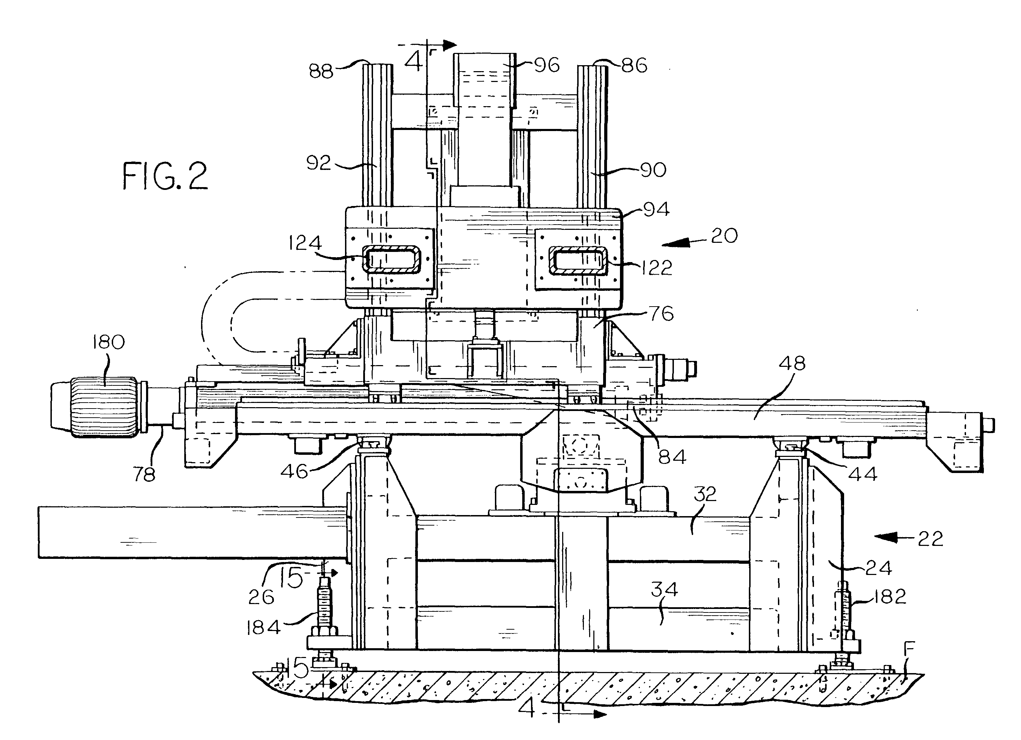

The cycle of operation of the lehr loader 20 begins with the carriage 48 retracted as far as possible from the lehr L, the carriage 76 positioned as far to the left as possible, in the configuration illustrated in FIG. 2, and with the carriage 94 in its lowermost position. Freshly formed glass containers C are presented in a linear array between the lehr loader 20 and the lehr L on and by way of an endless cross-conveyor XC. A row of containers C on the cross-conveyor XC is then advanced from the cross-conveyor XC by advancing the carriage 48 toward the lehr L, as heretofore described. During the advance of containers C to the lehr L, it is necessary to translate the carriage 76 to the right, as heretofore described, to keep incoming containers C on the cross-conveyor XC from colliding with the pusher bar 120. At the conclusion of the advance of a line of containers C into the lehr L, the pusher bar 120 is raised above the tops of incoming containers C on the cross-conveyor XC by raising the carriage 94 as heretofore described, and with cycles that at least partly overlap the raising of the carriage 94, the carriage 48 is retracted away from the lehr L to its start position and the carriage 76 is retracted to the left to its start position and, after the pusher bar 120 is retracted past the tops of the incoming containers C on the cross-conveyor XC, the carriage 94 is lowered to its start position.

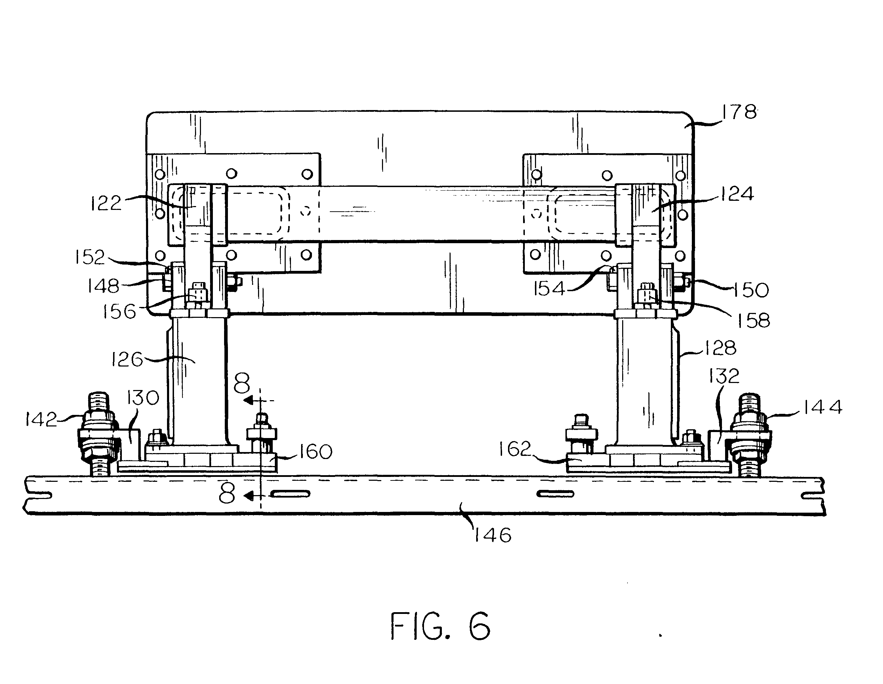

The pusher bar 120 is connected to a laterally extending support bar 146 (FIG. 6), and the support bar 146 is connected to extensions 130, 132 of the downwardly extending beams 126, 128, respectively, by like removable pins 134, 136, respectively. The purpose of the removable connection of the pusher bar 120 to the support bar 146 is to permit rapid changing of a pusher bar 120, for example, due to a change in the diameter of the containers C being processed by the lehr loader 20. In that regard, the pusher bar 120 preferably is provided with a container engaging face with a plurality of spaced apart container engaging recesses, preferable defined by a plurality of spaced apart equilateral triangularly shaped attachments secured to the front face of the pusher bar 120, the recesses being sized and spaced in a manner designed for the processing of containers C of a given diameter. Thus, upon a change of the diameter in the containers C being processed by the lehr loader 20, it is important to be able to rapidly change the pusher bar 120 to one whose container engaging face is provided with recesses that are sized and spaced apart differently, and the connection of the pusher bar 120 to the support bar 146, as described, permits such a rapid change in the pusher bar 120.

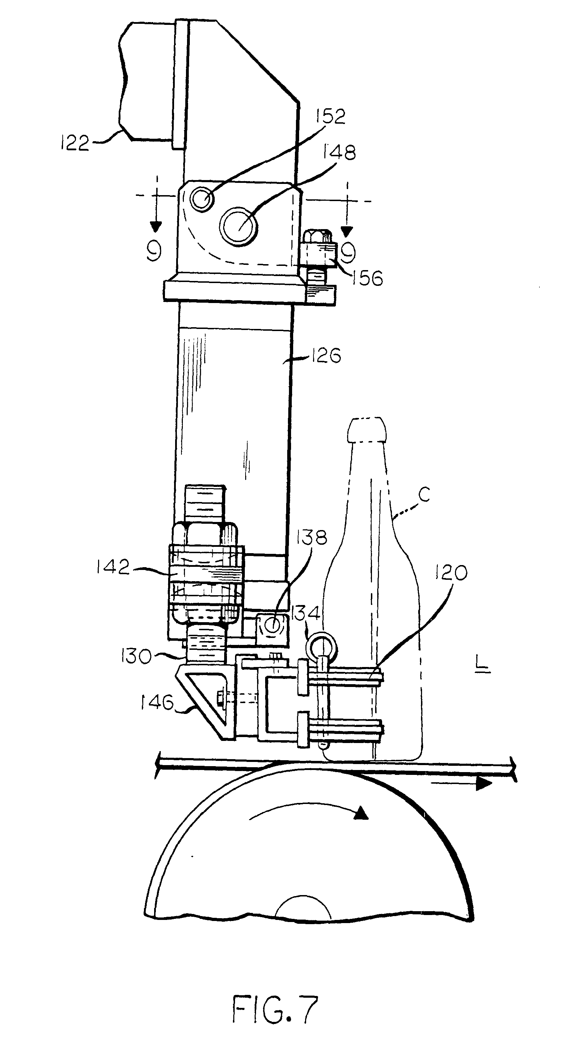

The extensions 130, 132 are pivotally connected to the downwardly extended beams 126, 128, respectively, about axes 138, 140, respectively. Threaded adjusters 142, 144, respectively, are provided to permit adjustment of the angle of the pusher bar 120 with respect to containers C that it engages, preferably so that the pusher bar 120 engages the bottom portion of each container C slightly before it engages a higher portion of such container C to impart a slight tilt to the container C away from its direction of motion into the lehr L, as shown in FIG. 7.

The downwardly extending beams 126, 128 are pivotally connected to the longitudinally extending beams 122, 124, respectively, about axes 148, 150, respectively. In normal operation of the lehr loader 20, pivoting of the beams 126, 128 with respect to the beams 122, 124 about the axes 148, 150, respectively, is resisted by shear pins 152, 154, respectively, so that no such pivoting motion will occur. However, in the event of a blockage of the transfer of containers C into the lehr L, the shear pins 152, 154 will fail due to the increased load on the pusher bar 120, and the downwardly extending beams 126, 128 will thereupon rotate through a limited arc with respect to the beams 122, 124, respectively, to thereby retract the pusher bar 120 from engagement with containers C. To permit adjustment in the included angle normally existing between the downwardly extending beams 126, 128 with respect to the longitudinally extending beams 122, 124, respectively, adjustable stops 156, 158 carried by the beams 122, 124, respectively, are provided to assist in properly positioning the pusher bar 120 with respect to the containers C to be engaged thereby.

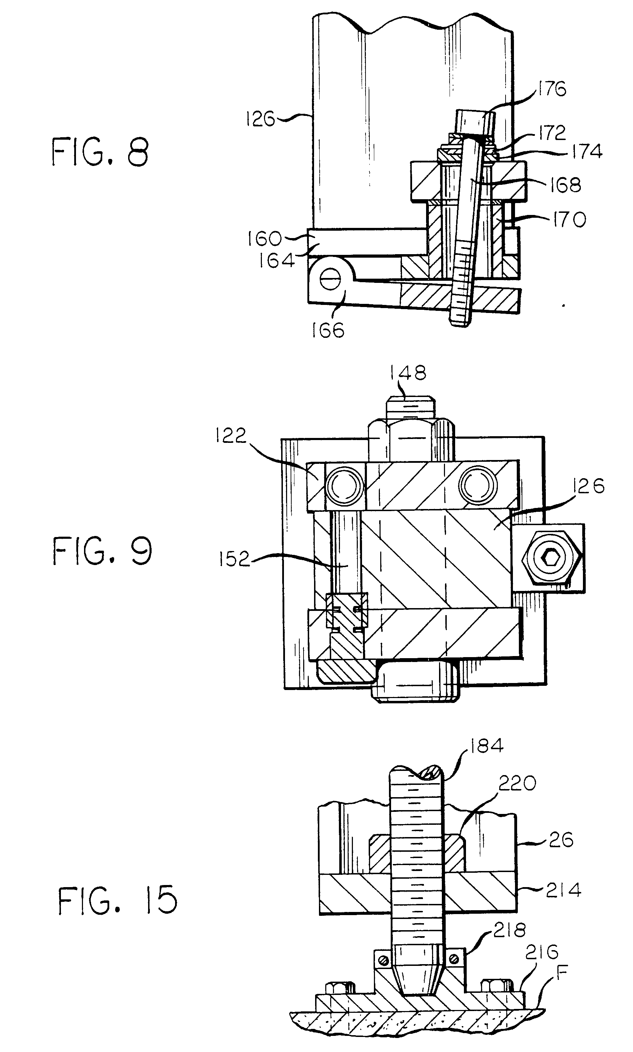

To permit adjustment in the position of the support bar 146 and the pusher bar 120 with respect to the downwardly extending beams 126, 128, and thereby with respect to containers C to be engaged by the pusher bar 120, the extensions 130, 132 are connected to the beams 126, 128 by plate assemblies 160, 162, respectively. The plate assembly 160 for the downwardly extending beam 126 is illustrated in FIG. 8, and comprises a first plate 164 that is secured to the beam 126 and a second plate 166 that is pivotally secured to the first plate 164. The orientation of the second plate 166 with respect to the first plate 164 is controlled by a threaded fastener 168 that extends through a boss 170 in the first plate 164 to be threadbare received in the second plate 166. A pair of tapered washers 172, 174 is positioned between a head portion 176 of the fastener 168 and the top of the boss 170. By varying the circumferential orientation of the washers 172, 174 with respect to one another, the angle of the threaded fastener 168 with respect to the downwardly extending beam 126 can be varied, to thereby vary the angular position of the support bar 146 and the pusher bar 120 with respect to containers C. The plate assembly 162 is not specifically illustrated in detail in the drawing, but its design is the same as that of the plate assembly 160.

To shield the linear actuator 96 from thermal radiation from the lehr L and the containers C being processed by the lehr loader 20, a radiation baffle 178 is secured to the carriage 94, preferably to the vertically extending portion of the carriage, preferably to the members 86, 88 thereof. Further, to protect many other portions of the lehr loader 20 from thermal radiation from the lehr L and the containers C, a fixed baffle 180 is positioned between the cross-conveyor XC and the portions of the lehr loader 20 beneath and to the rear of the longitudinally extending beams 122, 124 of the carriage 94.

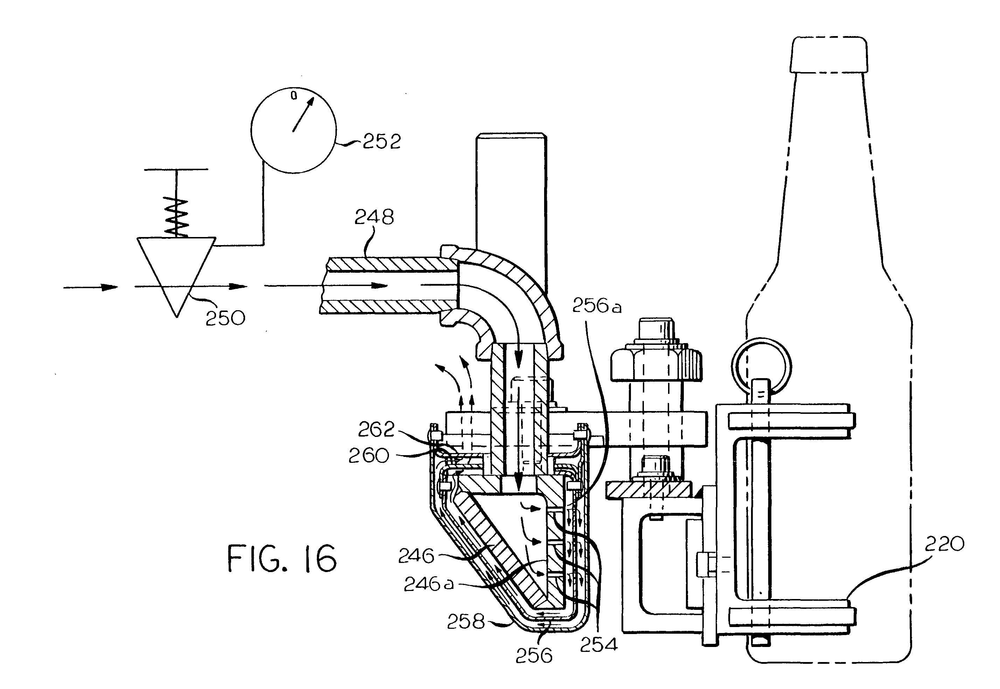

The horizontally acting servo motors 52, 80 are capable of delivering high levels of torque during rapid acceleration of the carriages 48, 76, respectively, and are capable of braking quite rapidly during the rapid deceleration of such carriages. The loads resulting from such rapid acceleration and deceleration are quite substantial, and would tend to vibrate the legs of the frame 22 from their desired positions with respect to the lehr L unless properly compensated for in the installation of the frame 22. To effect such proper compensation, the legs 24, 26, 28, 30 of the frame 22 are mounted on the threaded members 182, 184, 186, 188, respectively. Members 182, 184, 186, 188, in turn, are securely anchored in a floor F of a glass container manufacturing plant where the lehr loader 20 is installed. Such an installation technique also permits making precise adjustments of the elevation of each of the legs 24, 26, 28, 30 of the frame 22 with respect to the floor F, and it also serves to isolate each of the servo motors of the lehr loader, namely the motors 52, 80 and 98, from the effects of any vibrations occurring in the floor F from any source. The anchoring of the leg 26 to the floor F by way of its threaded member 184 is specifically illustrated in FIG. 15 where the leg 26 is provided with a horizontal flange 214 through which the threaded member 184 passes. A free end of the threaded member 184 is received in a flange 216 that is bolted to the floor F, a split collar 218 being provided to permit adjustment of the position of the threaded member 184 with respect to the flange 216. The vertical position of the leg 26 with respect to the flange 216 is adjustably controlled by a nut 220 that threadbare receives the threaded fastener 184 and bears against the flange 214.

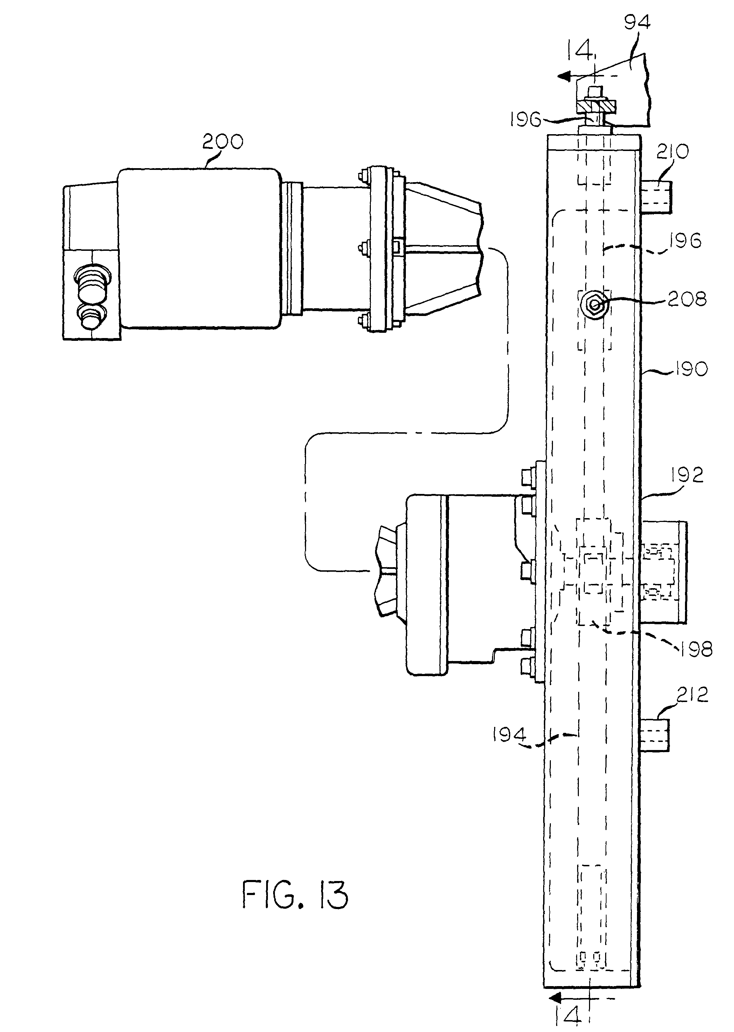

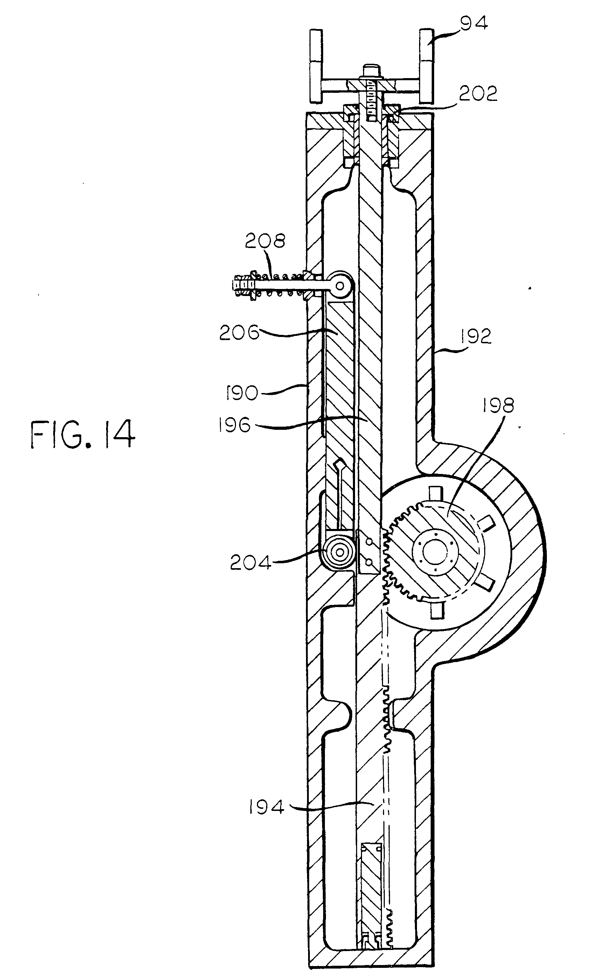

If desired, the enclosed linear actuator 96 for the carriage 94 can be replaced by an enclosed linear actuator of the rack and pinion type 190 as illustrated in FIGs. 13 and 14. The linear actuator 190 has a housing 192 with a toothed rack 194 positioned within the housing 192. The rack 194 has the inner end of an extension 196 secured to an end thereof, and the outer end of the extension 196 extends beyond the housing 192 and is secured to the carriage 94. The teeth of the rack 194 engage the teeth of a toothed pinion 198, and the pinion 198 is caused to reversibly rotate by virtue of its coaxial connection to a reversible a.c. servo motor 200. The housing 192 is provided with a seal 202 to sealingly accommodate movement of the extension 196 with respect to the housing 192. Proper engagement of the rack 194 and the pinion 198 is provided by a roller 204 that engages the reverse side of the rack 194 in radial alignment with the axis of rotation of the pinion 198, the roller 204 being rotatably mounted at an end of a lever arm 206. The load of the roller 204 on the rack 196 may be adjusted by an adjustment mechanism 208 that acts against the lever arm 206 at a location away from the location of the roller 204. The housing 192 of the linear actuator 190 is provided with inlet and outlet connections 210, 212, respectively, to permit lubricating oil to be continuously circulated through the housing 192, preferably after such lubricating oil has been filtered and cooled, at least by circulating it through lines that are away from the thermal effects of the annealing lehr.

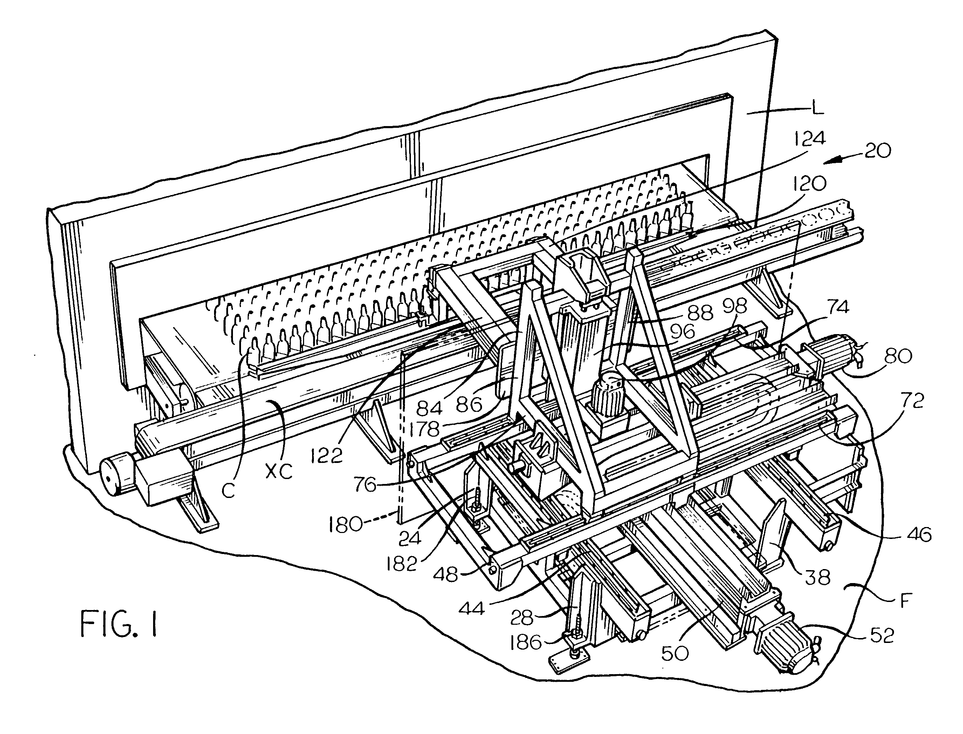

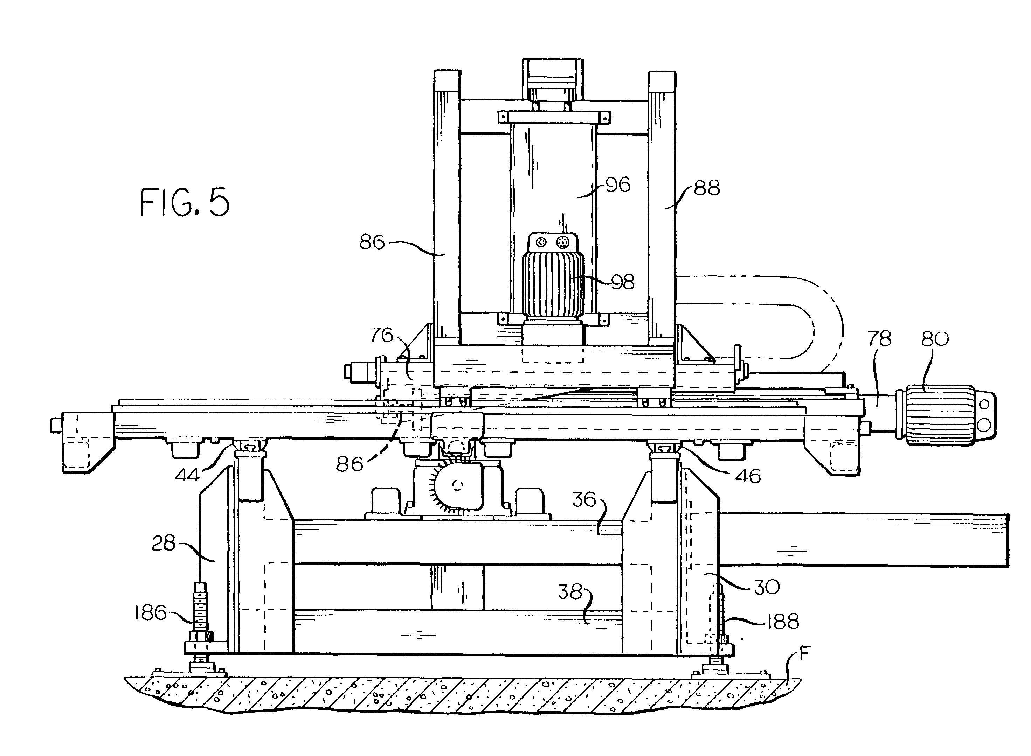

Fig. 16 illustrates a support bar 246 that is an alternative to the support bar 146 of the embodiment of Figs. 1-15. The support bar 246 is used to support a pusher bar 220 that performs the functions attributed to the pusher bar 120 of the embodiment of Figs. 1-15. In a typical lehr loader for an annealing lehr that is used to anneal freshly formed glass containers, the support bar 246, which inherently must be quite large in its lateral extent, is subjected to elevated temperatures because of its proximity to an open entrance to a relatively high temperature annealing lehr, and/or to freshly formed containers that still retain significant levels of latent heat from their formation. For example, the glass containers passing through a lehr loader on their way to an annealing lehr are typically at temperatures of at least 523°C (1000° F). In such an environment, the support bar 246, if it is not continuously cooled during its operation, can easily reach a temperature of approximately 190°C (400° F)., and in some instances temperatures of up to approximately 523°C (1000°F). An uncooled support bar for a glass container annealing lehr, then, is subject to a considerable degree of dimensional distortion in operation do in part to the temperature levels it is capable of reaching and in part to its substantial lateral extent.

To avoid dimensional distortion in operation, the support bar 246 is continuously cooled by causing compressed air or other fluid coolant to flow therethrough from an inlet line 248, which receives a clean, dry air supply through a solenoid 250 at a pressure that is regulated by a gauge 252. Cooling air from the inlet line 248 flows into the support bar 246, which is annular in cross section, and flows outwardly from the support bar 246 through a plurality of apertures 254 in a generally vertically extending front face 246a of the support bar 246. The cooling effect of the cooling air flowing through the support bar 246 is adiabatically augmented as its pressure drops based on Boyle's law, in which the ratio of the product of inlet pressure and inlet volume to inlet temperature is the same as the ratio of the product of outlet pressure and outlet volume to outlet temperature.

The cooling of the support bar 246 is further augmented by surrounding it with one or more radiation shields, shown as a pair of radiation shields 256, 258. The innermost radiation shield 256 is spaced from the exterior of the support bar 246, preferably by a distance of approximately 1/8 inch, to prevent conductive heat transfer therebetween. Likewise, the outermost radiation shield 258 is spaced from the innermost radiation shield 256, again, preferably, by a distance of approximately 1/8 inch, to prevent conductive heat transfer therebetween.

The cooling air passing through the apertures 254 in the support bar 246 passes into the space between the support bar 246 and the radiation shield 256 and, through apertures 256a in the radiation shield 256, part of such cooling air passes into the space between the radiation shield 256 and the radiation shield 258. Such streams of cooling air then flow, in parallel, around the support bar 246 to exhaust openings 260, 262, respectively, where the spent cooling air, which preferably is at a temperature of no more than 130°C (250° F), is exhausted to atmosphere. Preferably, the exhaust openings 260, 262, as shown, are directed away from incoming freshly formed glass containers to avoid subjecting such containers to an unwanted cooling effect.

Although the best mode contemplated by the inventor for carrying out the present invention as of the filing date hereof has been shown and described herein, it will be apparent to those skilled in the art that suitable modifications, variations and equivalents may be made without departing from the scope of the invention, such scope being limited solely by the terms of the following claims.

## Claims

1. Apparatus for transferring a plurality of articles (C) arranged in a straight line on a conveyor (XC) transversely of the conveyor into a processing unit (L), said apparatus comprising:
a first carriage (48), said first carriage being movable in a horizontal plane along a first horizontal axis toward and away from the processing unit (L); means (22,44,46) for supporting the first carriage (48) at a predetermined elevation with respect to the processing unit (L);
first linear actuator means (50) for reciprocating said first carriage (48) along the first axis;
first motor means (52) for driving said first linear actuator means (50);
a second carriage (76), said second carriage being slidably supported on said first carriage (48) for reciprocation with said first carriage and for reciprocation with respect to said first carriage along a second axis extending transversely of the direction of the first axis;
second linear actuator means (78) for reciprocating said second carriage (76) along the second horizontal axis;
second motor means (80) for driving said second linear actuator means (78);
a third carriage (94), said third carriage being slidably supported on said second carriage (76) for reciprocation with said second carriage and said first carriage and for reciprocation with respect to said second carriage along a vertical axis;
third linear actuator means (96,190) for reciprocating said third carriage (94) along the vertical axis;
third motor means (98) for driving said third linear actuator means (96,190), and
pusher bar means (120)carried by said third carriage for transferring the plurality of articles (C) from the conveyor (XC) into the processing unit (L) upon motion of said first carriage (48) toward the processing unit,
**characterized in that**
said first, second and third linear actuators means (50; 78; 96; 190) are in the form of enclosed means, each comprising
a driving member in the form of a screw (54; 100) or - for the third linear actuator means (190) - in the form of a pinion (198);
a driven member in the form of a nut (58), or - for the third linear actuator means (190) - in the form of a rack (194) ;
said driving member and driven member engaging one another with threads or teeth;
at least one long slender rod (62, 62; 110, 112; 196) having a first, inner end, a second, outer end and an intermediate portion, and
a housing (56; 82; 102; 192) having each a sealed outlet opening (66, 68; 114, 116; 202) for said slender rod (62, 64; 110, 112; 196), said housing enclosing said driving member and said driven member and having means for rotably mounting said driving member and means for sliding by supporting said driven member, and **in that**
each housing (56; 82; 102; 192) of said first, second and third linear actuator means (50; 78; 96; 190) is arranged in a space between a respective first, second and third pair of slides (44, 46; 72, 72; 92) each of which is arranged for supporting a respective one of said first, second and third carriages (48, 76, 94).

2. The apparatus according to claim 1
wherein the plurality of articles (C) comprises a plurality of freshly formed glass containers, wherein the processing unit (L) comprises an annealing lehr and
wherein the conveyor (XC) comprises a cross-conveyor that is movable to present freshly formed glass containers before an entrance into the annealing lehr.

3. The apparatus according to claim 1 or 2
wherein the housing (56) of said first linear actuator means (50) is secured to said means (22) for supporting,
said driving member is a screw (54) within said housing (56), said screw being reversibly rotatable with respect to said housing (56),
said driven member is a nut (58) within said housing (56), said screw (54) being rotatable within said nut (58) to cause said nut to reciprocate within said housing (56),
said at least one long slender rod (62,64) has its inner end positioned within said housing (56) and its outer end positioned outside said housing (56),
means (60) for connecting said inner end of said at least one long slender rod (62,64) to said nut (58) to cause said at least one long slender rod to reciprocate with said nut (58) and means (70) for connecting said outer end of said at least one long slender rod (62,64) to said first carriage (48) to cause said first carriage to reciprocate with respect to said at least one long slender rod.

4. The apparatus according to claim 3
wherein said first or second or third motor means (52;80;98;200) comprises a reversible a.c. servo motor.

5. The apparatus according to claim 4
wherein said reversible a.c. servo motor has an output shaft and wherein said output shaft is positioned coaxially with said screw (54).

6. The apparatus according to claim 3, 4 or 5
wherein said at least one long slender rod comprises first and second spaced apart long slender rods (62,64) said screw (54) being positioned between said first and second long slender rods.

7. The apparatus according to any of claims 1 to 8
wherein the housing (82) of said second linear actuator means (78) is secured to said first carriage (48),
said driving members is a screw within said housing (82) of said second linear actuator means (78), said screw being reversibly rotatable with respect to said housing of said second linear actuator means,
said driven member is a nut within said housing (82) of said second linear actuator means, said screw of said second linear actuator means being rotatable within said nut of said second linear actuator means to cause said nut of said second linear actuator means to reciprocate means within said housing of said second linear actuator means,
at least one long slender rod having an inner end positioned within said housing of said second linear actuator means and an outer end positioned outside said housing of said second linear actuator means, means for connecting said inner end of said at least one long slender rod of said second linear actuator means to said nut of said second linear actuator means to cause said at least one long slender rod of said second linear actuator means to reciprocate with said nut of said second linear actuator means, and
means for connecting said outer end of said at least one long slender rod of said second linear actuator means to said second carriage (76) to cause said second carriage to reciprocate with said at least one long slender rod of said second linear actuator means.

8. The apparatus according to claim 7
wherein said at least one slender rod of said second linear actuator means comprises first and second spaced apart long slender rods, said screw of said second linear actuator means being positioned between said first and second long slender rods of said second linear actuator means.

9. The apparatus according to any of claims 1 to 8
wherein the housing (102) of said third linear actuator means (98) is secured to said second carriage (76),
said driving member is a screw (100) within said housing of said third linear actuator means (96), said screw (100) of said third linear actuator means (96) being reversibly rotatable with respect to said housing (102) of said third linear actuator means (96),
said driving member is a nut (104) within said housing (102) of said third linear actuator means (96), said screw (100) of said third linear actuator means being rotatable within said nut (104) of said third linear actuator means to cause said nut of said third linear actuator means to reciprocate within said housing (102) of said third linear actuator means,
said at least one long slender rod (110,112) having an inner end positioned within said housing (102) of said third linear actuator means and an outer end positioned outside said housing of said third linear actuator means,
means (108) for connecting said inner end of said at least one long slender rod (110,112) of said third linear actuator means (96) to said nut (104) of said third linear actuator means to cause said at least one long slender rod of said third linear actuator means to reciprocate with said nut of said third linear actuator means, and
means (118) for connecting said outer end of said at least one long slender rod (110,112) of said third linear actuator means (96) to said third carriage (94) to cause said third carriage to reciprocate with said at least one long slender rod of said third linear actuator means.

10. The apparatus according to any of claims 4 to 9
wherein said third reversible a.c. servo motor (98) has an output shaft, said output shaft of said third reversible a.c. servo motor (98) being spaced from and extending parallel to an axis of said screw (100) of said third linear actuator means (96) and further comprising means (106) for transmitting torque from the output shaft of said third reversible a.c. servo motor (98) to said screw (100) of said third linear actuator means (96,190).

11. The apparatus according to claim 10 and further comprising means for enclosing said means for transmitting torque.

12. The apparatus according to any of claims 1 to 11
wherein the housing (192) of said third linear actuator means (190) is secured to said second carriage (76), said driven member is a rack (194) within said housing (192) of said third linear actuator means, said rack being reciprocate within said housing of said third linear actuator means, and
wherein said driving member is a pinion (198) within said housing (192) of said third linear actuator means, said pinion being reversibly rotatable and engaging said rack to cause said rack to reciprocate.

13. The apparatus according to any of claims 1 to 12
wherein said means (22,44,46) for supporting the first carriage (48) comprises a frame (22) with a spaced apart plurality of vertically extending legs (24,26,28,30) and further comprising means for anchoring each of said plurality of legs to a floor (F) beneath said frame (22).

14. The apparatus according to any of claims 1 to 13
and further comprising
a pusher bar (120), and
shear pin means (152,154) for releasably and pivotably connecting said pusher bar to said third carriage (94).

15. The apparatus according to any of claims 2 to 14
and further comprising
a radiation baffle secured to said first carriage (48).

16. The apparatus according to claim 15
and further comprising
a fixed baffle (180) positioned between the cross-conveyor (XC) and said first and second carriages (48,76).

17. The apparatus according to any of claims 3 to 16
wherein said first or second linear actuator means (50;78) further comprises
a radiation shield (56a) positioned around said housing (56;82) and spaced from said housing to reduce the transfer of heat to the interior of said first or second or third linear actuator means.

## Patentansprüche

1. Vorrichtung zum Verschieben einer Mehrzahl von Artikeln (C), die in einer geraden Linie auf einer Fördereinrichtung (XC) angeordnet sind, quer zu der Fördereinrichtung in eine Verarbeitungseinheit (L) hinein, wobei die Vorrichtung umfasst:
einen ersten Schlitten (48), wobei der erste Schlitten in einer horizontalen Ebene entlang einer ersten horizontalen Achse zu der Verarbeitungseinheit (L) hin und von dieser weg bewegbar ist;
Mittel (22, 44, 46) zum Stützen des ersten Schlittens (48) in einer vorgegebenen Höhe in Bezug auf die Verarbeitungseinheit (L);
eine erste lineare Stelleinrichtung (50) zum Hin- und Herbewegen des ersten Schlittens (48) entlang der ersten Achse;
eine erste Motoreinrichtung (52) zum Antrieb der ersten linearen Stelleinrichtung (50) ;
einen zweiten Schlitten (76), wobei der zweite Schlitten verschiebbar auf dem ersten Schlitten (48) gehalten wird, und zwar zur Hin- und Herbewegung mit dem ersten Schlitten und zur Hin- und Herbewegung in Bezug auf den ersten Schlitten entlang einer zweiten Achse, die sich quer zu der Richtung der ersten Achse erstreckt;
eine zweite lineare Stelleinrichtung (78) zum Hinund Herbewegen des zweiten Schlittens (76) entlang der zweiten horizontalen Achse;
eine zweite Motoreinrichtung (80) zum Antrieb der zweiten linearen Stelleinrichtung (78) ;
einen dritten Schlitten (94), wobei der dritte Schlitten verschiebbar auf dem zweiten Schlitten (76) gehalten wird, und zwar für eine Hin- und Herbewegung mit dem zweiten Schlitten und dem ersten Schlitten und für eine Hin- und Herbewegung in Bezug auf den zweiten Schlitten entlang einer vertikalen Achse;
eine dritte lineare Stelleinrichtung (96, 190) zur Hin- und Herbewegung des dritten Schlittens (94) entlang der vertikalen Achse;
eine dritte Motoreinrichtung (98) zum Antrieb der dritten linearen Stelleinrichtung (96, 190) ; und
ein Schubstangenmittel (120), das durch den dritten Schlitten gehalten wird, um die Mehrzahl von Artikeln (C) von der Fördereinrichtung (XC) bei Bewegung des ersten Schlittens (48) in Richtung der Verarbeitungseinheit in die Verarbeitungseinheit (L) zu verschieben;
**dadurch gekennzeichnet, dass**
die erste, zweite und dritte lineare Stelleinrichtung (50; 78; 96; 190) in Form von gekapselten Einrichtungen vorgesehen sind, die jeweils umfassen:
ein Antriebselement in Form einer Spindel (54; 100) oder - für die dritte lineare Stelleinrichtung (190) - in Form eines Ritzels (198) ;
ein angetriebenes Element in Form einer Mutter (58) oder - für die dritte lineare Stelleinrichtung (190) - in Form einer Zahnstange (194);
wobei das Antriebselement und das angetriebene Element mit einem Gewinde oder mit Zähnen ineinander eingreifen;
mindestens eine lange, schlanke Stange (62, 64; 110, 112; 196) mit einem ersten, inneren Ende, einem zweiten, äußeren Ende und einem Mittelteil; und
ein Gehäuse (56; 82; 102; 192) mit jeweils einer abgedichteten Auslassöffnung (66, 68; 114, 116; 202) für die schlanke Stange (62, 64; 110, 112; 196), wobei das Gehäuse das Antriebselement und das angetriebene Element umschließt und Mittel zur drehbaren Montage des Antriebselements sowie Mittel zum Verschieben durch Stützen des angetriebenen Elements aufweist; und dass
das jeweilige Gehäuse (56; 82; 102; 192) der ersten, zweiten und dritten Stelleinrichtung (50; 78; 96; 190) in einem Zwischenraum zwischen einem jeweiligen ersten, zweiten und dritten Paar von Schienen (44, 46; 72, 74; 92) angeordnet ist, die jeweils zum Stützen des ersten, zweiten bzw. dritten Schlittens (48, 76, 94) vorgesehen sind.

2. Vorrichtung nach Anspruch 1,
**dadurch gekennzeichnet, dass** die Mehrzahl von Artikeln (C) eine Mehrzahl von frisch geformten Glasbehältern umfasst, wobei die Verarbeitungseinheit (L) einen Aushärte-Kühlofen umfasst und wobei die Transporteinrichtung (XC) ein Querförderband umfasst, das derart bewegbar ist, dass die frisch geformten Glasbehälter vor einem Eingang in den Aushärte-Kühlofen angeboten werden.

3. Vorrichtung nach Anspruch 1 oder 2,
mit folgenden Merkmalen:
das Gehäuse (56) der ersten linearen Stelleinrichtung (50) ist an einem Mittel (22) zum Stützen befestigt;
das Antriebselement ist eine Spindel (54) in dem Gehäuse (56), wobei die Spindel in Bezug auf das Gehäuse (56) umkehrbar drehbar ist;
das angetriebene Element ist eine Mutter (58) in dem Gehäuse (56), wobei die Spindel (54) in der Mutter (58) drehbar ist, so dass bewirkt wird, dass die Mutter in dem Gehäuse (56) hin- und herläuft;
mindestens eine lange, schlanke Stange (62, 64), deren inneres Ende in dem Gehäuse (56) angeordnet ist und deren äußeres Ende außerhalb des Gehäuses (56) angeordnet ist;
ein Mittel (60) zum Verbinden des inneren Endes der mindestens einen langen, schlanken Stange (62, 64) mit der Mutter (58), um zu bewirken, dass die mindestens eine lange, schlanke Stange mit der Mutter (58) hin- und herläuft; sowie
ein Mittel (70) zum Verbinden des äußeren Endes der mindestens einen langen, schlanken Stange (62, 64) mit dem ersten Schlitten (48), um zu bewirken, dass der erste Schlitten mit der mindestens einen langen, schlanken Stange hin- und herläuft.

4. Vorrichtung nach Anspruch 3,
**dadurch gekennzeichnet, dass** die erste oder zweite oder dritte Motoreinrichtung (52; 80; 98; 200) einen Wechselstrom-Servomotor mit umschaltbarer Antriebsrichtung umfasst.

5. Vorrichtung nach Anspruch 4,
**dadurch gekennzeichnet, dass** der Wechselstrom-Servomotor mit umschaltbarer Antriebsrichtung eine Abtriebswelle aufweist und dass die Abtriebswelle koaxial zu der Spindel (54) angeordnet ist.

6. Vorrichtung nach Anspruch 3, 4 oder 5,
**dadurch gekennzeichnet, dass** die mindestens eine lange, schlanke Stange eine erste und eine zweite voneinander beabstandete lange, schlanke Stange (62, 64) umfasst,
wobei die Spindel (54) zwischen der ersten und der zweiten langen, schlanken Stange angeordnet ist.

7. Vorrichtung nach einem der Ansprüche 1 bis 6,
mit folgenden Merkmalen:
das Gehäuse (82) der zweiten linearen Stelleinrichtung (78) ist an dem ersten Schlitten (48) befestigt;
das Antriebselement ist eine Spindel in dem Gehäuse (82) der zweiten linearen Stelleinrichtung (78), wobei die Spindel in Bezug auf das Gehäuse der zweiten linearen Stelleinrichtung umkehrbar drehbar ist;
das angetriebene Element ist eine Mutter in dem Gehäuse (82) der zweiten linearen Stelleinrichtung, wobei die Spindel der zweiten linearen Stelleinrichtung in der Mutter der zweiten linearen Stelleinrichtung drehbar ist, so dass bewirkt wird, dass die Mutter der zweiten linearen Stelleinrichtung in dem Gehäuse der zweiten linearen Stelleinrichtung hin- und herläuft;
mindestens eine lange, schlanke Stange, deren inneres Ende in dem Gehäuse der zweiten Stelleinrichtung angeordnet ist und deren äußeres Ende außerhalb des Gehäuses der zweiten linearen Stelleinrichtung angeordnet ist;
Mittel zum Verbinden des inneren Endes der mindestens einen langen, schlanken Stange der zweiten linearen Stelleinrichtung mit der Mutter der zweiten linearen Stelleinrichtung, um zu bewirken, dass die mindestens eine lange, schlanke Stange der zweiten linearen Stelleinrichtung mit der Mutter der zweiten linearen Stelleinrichtung hin- und herläuft; und
Mittel zum Verbinden des äußeren Endes der mindestens einen langen, schlanken Stange der zweiten linearen Stelleinrichtung mit dem zweiten Schlitten (76), um zu bewirken, dass der zweite Schlitten mit der mindestens einen langen, schlanken Stange der zweiten linearen Stelleinrichtung hin- und herläuft.

8. Vorrichtung nach Anspruch 7,
**dadurch gekennzeichnet, dass** die mindestens eine schlanke Stange der zweiten linearen Stelleinrichtung eine erste und eine zweite voneinander beabstandete lange, schlanke Stange umfasst, wobei die Spindel der zweiten linearen Stelleinrichtung zwischen der ersten und der zweiten langen, schlanken Stange der zweiten linearen Stelleinrichtung angeordnet ist.

9. Vorrichtung nach einem der Ansprüche 1 bis 8, mit
folgenden Merkmalen:
das Gehäuse (102) der dritten linearen Stelleinrichtung (98) ist an dem zweiten Schlitten (76) befestigt;
das Antriebselement ist eine Spindel (100) in dem Gehäuse der dritten linearen Stelleinrichtung (96), wobei die Spindel (100) der dritten linearen Stelleinrichtung (96) in Bezug auf das Gehäuse (102) der dritten linearen Stelleinrichtung (96) umkehrbar drehbar ist;
das angetriebene Element ist eine Mutter (104) in dem Gehäuse (102) der dritten linearen Stelleinrichtung (96), wobei die Spindel (100) der dritten linearen Stelleinrichtung in der Mutter (104) der dritten linearen Stelleinrichtung drehbar ist, so dass bewirkt wird, dass die Mutter der dritten linearen Stelleinrichtung in dem Gehäuse (102) der dritten linearen Stelleinrichtung hinund herläuft;
ein inneres Ende der mindestens einen langen, schlanken Stange (110, 112) ist in dem Gehäuse (102) der dritten linearen Stelleinrichtung angeordnet und ein äußeres Ende ist außerhalb des Gehäuses der dritten linearen Stelleinrichtung angeordnet;
ein Mittel (108) zum Verbinden des inneren Endes der mindestens einen langen, schlanken Stange (110, 112) der dritten linearen Stelleinrichtung (96) mit der Mutter (104) der dritten linearen Stelleinrichtung, um zu bewirken, dass die mindestens eine lange, schlanke Stange der dritten linearen Stelleinrichtung mit der Mutter der dritten linearen Stelleinrichtung hin- und herläuft; und
ein Mittel (118) zum Verbinden des äußeren Endes der mindestens einen langen, schlanken Stange (110, 112) der dritten linearen Stelleinrichtung (96) mit dem dritten Schlitten (94), um zu bewirken, dass der dritte Schlitten mit der mindestens einen langen, schlanken Stange der dritten linearen Stelleinrichtung hin- und herläuft.

10. Vorrichtung nach einem der Ansprüche 4 bis 9,
**dadurch gekennzeichnet, dass** der dritte Wechselstrom-Servomotor mit umkehrbarer Antriebsrichtung (98) eine Abtriebwelle aufweist, wobei die Abtriebswelle des dritten Wechselstrom-Servomotors (98) mit umkehrbarer Antriebsrichtung im Abstand zu einer Achse der Spindel (100) der dritten linearen Stelleinrichtung (96) angeordnet ist und sich parallel zu dieser erstreckt, und dass die Vorrichtung ferner eine Einrichtung (106) zur Übertragung des Drehmoments von der Abtriebswelle des dritten Wechselstrom-Servomotors (98) mit umkehrbarer Antriebsrichtung auf die Spindel (100) der dritten linearen Stelleinrichtung (96, 190) umfasst.

11. Vorrichtung nach Anspruch 10,
**dadurch gekennzeichnet, dass** sie ferner außerdem Mittel zum Umschließen der Einrichtung zur Übertragung des Drehmoments aufweist.

12. Vorrichtung nach einem der Ansprüche 1 bis 11,
**dadurch gekennzeichnet, dass**
das Gehäuse (192) der dritten linearen Stelleinrichtung (190) an dem zweiten Schlitten (76) befestigt ist, wobei das angetriebene Element eine Zahnstange (194) in dem Gehäuse (192) der dritten linearen Stelleinrichtung ist, wobei die Zahnstange in dem Gehäuse der dritten linearen Stelleinrichtung hinund herbewegt wird; und dass
das antreibende Element ein Ritzel (198) in dem Gehäuse (192) der dritten linearen Stelleinrichtung ist,
wobei das Ritzel umkehrbar drehbar ist und in die Zahnstange eingreift, um zu bewirken, dass sich die Zahnstange hin- und herbewegt.

13. Vorrichtung nach einem der Ansprüche 1 bis 12,
**dadurch gekennzeichnet, dass** die Mittel (22, 44, 46) zum Stützen des ersten Schlittens (48) einen Rahmen (22) mit einer Mehrzahl von im Abstand zueinander angeordneten, sich vertikal erstreckenden Beinen (24, 26, 28, 30) umfassen und ferner Mittel zur Verankerung jedes der mehreren Beine an einem Boden (F) unterhalb des Rahmens (22) umfassen.

14. Vorrichtung nach einem der Ansprüche 1 bis 13,
und ferner umfassend:
eine Schubstange (120); und
Scherbolzenmittel (152, 154), um die Schubstange lösbar und schwenkbar mit dem dritten Schlitten (94) zu verbinden.

15. Vorrichtung nach einem der Ansprüche 2 bis 14, und ferner umfassend:
ein Strahlungsablenkblech, das an dem ersten Schlitten (48) befestigt ist.

16. Vorrichtung nach Anspruch 15, **dadurch gekennzeichnet**, und ferner umfassend:
ein feststehendes Ablenkblech (180), das zwischen dem Querförderband (XC) und dem ersten und zweiten Schlitten (48, 76) angeordnet ist.

17. Vorrichtung nach einem der Ansprüche 3 bis 16,
**dadurch gekennzeichnet, dass** die erste oder die zweite lineare Stelleinrichtung (50; 78) ferner umfasst:
eine Strahlungsabschirmung (56a), die um das Gehäuse (56; 82) herum angeordnet ist und von dem Gehäuse beabstandet ist, um die Überleitung von Wärme in das Innere der ersten oder zweiten oder dritten linearen Stelleinrichtung zu reduzieren.

## Revendications

1. Dispositif pour transférer une pluralité d'articles (C) agencés en ligne droite sur un convoyeur (XC) en travers du convoyeur dans une unité de traitement (L), ledit dispositif comprenant :
un premier chariot (48), ledit premier chariot étant mobile dans un plan horizontal le long d'un premier axe horizontal, pour s'approcher et s'éloigner de l'unité de traitement (L);
un moyen (22, 44, 46) pour supporter le premier chariot (48) à une hauteur prédéfinie par rapport à l'unité de traitement (L) ;
un premier moyen formant actionneur linéaire (50) pour faire aller et venir ledit premier chariot (48) le long du premier axe ;
un premier moyen formant moteur (52) pour entraîner ledit premier moyen formant actionneur linéaire (50) ;
un deuxième chariot (76), ledit deuxième chariot étant supporté à coulissement sur ledit premier chariot (48) en vue d'un mouvement de va-et-vient avec ledit premier chariot et d'un mouvement de va-et-vient par rapport audit premier chariot le long d'un deuxième axe qui s'étend en travers de la direction du premier axe ;
un deuxième moyen formant actionneur linéaire (78) pour faire aller et venir ledit deuxième chariot (76) le long du deuxième axe horizontal ;
un deuxième moyen formant moteur (80) pour entraîner ledit deuxième moyen formant actionneur linéaire (78) ;
un troisième chariot (94), ledit troisième chariot étant supporté à coulissement sur ledit deuxième chariot (76) en vue d'un mouvement de va-et-vient avec ledit deuxième chariot et avec ledit premier chariot et d'un mouvement de va-et-vient par rapport audit deuxième chariot le long d'un axe vertical ;
un troisième moyen formant actionneur linéaire (96, 190) pour faire aller et venir ledit troisième chariot (94) le long de l'axe vertical ;
un troisième moyen formant moteur (98) pour entraîner ledit troisième moyen formant actionneur linéaire (96, 190), et
un moyen formant bras pousseur (120) porté par ledit troisième chariot pour transférer la pluralité d'articles (C) du convoyeur (XC) à l'unité de traitement (L) lors du déplacement dudit premier chariot (48) vers l'unité de traitement, **caractérisé en ce que**
lesdits premier, deuxième et troisième moyens formant actionneur linéaire (50 ; 78 ; 96 ; 190) sont sous la forme de moyens enfermés, comprenant chacun
un élément d'entraînement sous la forme d'une vis (54 ; 100) ou bien, pour le troisième moyen formant actionneur linéaire (190), sous la forme d'un pignon (198) ;
un élément entraîné sous la forme d'un écrou (58) ou bien, pour le troisième moyen formant actionneur linéaire (190), sous la forme d'une crémaillère (194) ;
lesdits élément d'entraînement et élément entraîné étant mutuellement en prise au moyen de filetages ou de dents ;
au moins une tige longue et fine (62, 64 ; 110, 112 ; 196) ayant une première extrémité, intérieure, et une deuxième extrémité, extérieure, et une partie intermédiaire, et
un boîtier (56 ; 82 ; 102 ; 192) comportant une ouverture de sortie étanche (66, 68 ; 114, 116 ; 202) pour ladite tige fine (62, 64 ; 110, 112 ; 196), ledit boîtier renfermant ledit élément d'entraînement et ledit élément entraîné et comportant un moyen pour monter à rotation ledit élément d'entraînement et un moyen servant au coulissement en supportant ledit élément entraîné, et **en ce que**
chaque boîtier (56 ; 82 ; 102 ; 192) desdits premier, deuxième et troisième moyens formant actionneur linéaire (50 ; 78 ; 96 ; 190) est placé dans un espace situé entre deux coulisses d'une première, deuxième et troisième paire de coulisses respectives (44, 46 ; 72, 74 ; 92), chacune d'entre elles agencée de manière à supporter un chariot respectif parmi lesdits premier, deuxième et troisième chariots (48, 76, 94).

2. Dispositif selon la revendication 1, dans lequel la pluralité d'articles (C) comprend une pluralité de récipients en verre qui viennent d'être formés, l'unité de traitement (L) comprenant une galerie de recuisson et le convoyeur (XC) comprenant un convoyeur transversal qui est mobile pour présenter les récipients en verre qui viennent d'être formés devant une entrée de la galerie de recuisson.

3. Dispositif selon la revendication 1 ou 2, dans lequel le boîtier (56) dudit premier moyen formant actionneur linéaire (50) est fixé audit moyen (22) servant à supporter,
ledit élément d'entraînement est une vis (54) dans ledit boîtier (56), ladite vis pouvant tourner de manière réversible par rapport audit boîtier (56),
ledit élément entraîné est un écrou (58) dans ledit boîtier (56), ladite vis (54) pouvant tourner dans ledit écrou (58) pour faire aller et venir ledit écrou dans ledit boîtier (56),
ladite au moins une tige longue et fine (62, 64) a son extrémité intérieure positionnée dans ledit boîtier (56) et son extrémité extérieure positionnée à l'extérieur dudit boîtier (56), un moyen (60) pour connecter ladite extrémité intérieure de ladite au moins une tige longue et fine (62, 64) audit écrou (58) pour faire aller et venir ladite au moins une tige longue et fine avec ledit écrou (58) et un moyen (70) pour connecter ladite extrémité extérieure de ladite au moins une tige longue et fine (62, 64) audit premier chariot (48) pour faire aller et venir ledit premier chariot avec ladite au moins une tige longue et fine.

4. Dispositif selon la revendication 3, dans lequel ledit premier ou deuxième ou troisième moyen formant moteur (52 ; 80 ; 98 ; 200) comprend un servomoteur réversible à courant alternatif.

5. Dispositif selon la revendication 4, dans lequel ledit servomoteur réversible à courant alternatif comporte un arbre de sortie et dans lequel ledit arbre de sortie est positionné de manière coaxiale avec ladite vis (54).

6. Dispositif selon la revendication 3, 4 ou 5, dans lequel ladite au moins une tige longue et fine comprend une première et une deuxième tige longue et fine espacées (62, 64), ladite vis (54) étant positionnée entre lesdites première et deuxième tiges longues et fines.

7. Dispositif selon l'une quelconque des revendications 1 à 6, dans lequel le boîtier (82) dudit deuxième moyen formant actionneur linéaire (78) est fixé audit premier chariot (48),
ledit élément d'entraînement est une vis dans ledit boîtier (82) dudit deuxième moyen formant actionneur linéaire (78), ladite vis pouvant tourner de manière réversible par rapport audit boîtier dudit deuxième moyen formant actionneur linéaire,
ledit élément entraîné est un écrou dans ledit boîtier (82) dudit deuxième moyen formant actionneur linéaire, ladite vis dudit deuxième moyen formant actionneur linéaire pouvant tourner dans ledit écrou dudit deuxième moyen formant actionneur linéaire pour faire aller et venir ledit écrou dudit deuxième moyen formant actionneur linéaire dans ledit boîtier dudit deuxième moyen formant actionneur linéaire,
au moins une tige longue et fine ayant une extrémité intérieure positionnée dans ledit boîtier dudit deuxième moyen formant actionneur linéaire et une extrémité extérieure positionnée à l'extérieur dudit boîtier dudit deuxième moyen formant actionneur linéaire, un moyen pour connecter ladite extrémité intérieure de ladite au moins une tige longue et fine dudit deuxième moyen formant actionneur linéaire audit écrou dudit deuxième moyen formant actionneur linéaire pour faire aller et venir ladite au moins une tige longue et fine dudit deuxième moyen formant actionneur linéaire avec ledit écrou dudit deuxième moyen formant actionneur linéaire, et
un moyen pour connecter ladite extrémité extérieure de ladite au moins une tige longue et fine dudit deuxième moyen formant actionneur linéaire audit deuxième chariot (76) pour faire aller et venir ledit deuxième chariot avec de ladite au moins une tige longue et fine dudit deuxième moyen formant actionneur linéaire.

8. Dispositif selon la revendication 7, dans lequel ladite au moins une tige fine dudit deuxième moyen formant actionneur linéaire comprend une première et une deuxième tige longue et fine espacées, ladite vis dudit deuxième moyen formant actionneur linéaire étant positionnée entre lesdites première et deuxième tiges longues et fines dudit deuxième moyen formant actionneur linéaire.

9. Dispositif selon l'une quelconque des revendications 1 à 8, dans lequel le boîtier (102) dudit troisième moyen formant actionneur linéaire (98) est fixé audit deuxième chariot (76),
ledit élément d'entraînement est une vis (100) dans ledit boîtier dudit troisième moyen formant actionneur linéaire (96), ladite vis (100) dudit troisième moyen formant actionneur linéaire (96) pouvant tourner de manière réversible par rapport audit boîtier (102) dudit troisième moyen formant actionneur linéaire (96),
ledit élément entraîné est un écrou (104) dans ledit boîtier (102) dudit troisième moyen formant actionneur linéaire (96), ladite vis (100) dudit troisième moyen formant actionneur linéaire pouvant tourner dans ledit écrou (104) dudit troisième moyen formant actionneur linéaire pour faire aller et venir ledit écrou dudit troisième moyen formant actionneur linéaire dans ledit boîtier (102) dudit troisième moyen formant actionneur linéaire,
ladite au moins une tige longue et fine (110, 112) ayant une extrémité intérieure positionnée dans ledit boîtier (102) dudit troisième moyen formant actionneur linéaire et une extrémité extérieure positionnée à l'extérieur dudit boîtier dudit troisième moyen formant actionneur linéaire,
un moyen (108) pour connecter ladite extrémité intérieure de ladite au moins une tige longue et fine (110, 112) dudit troisième moyen formant actionneur linéaire (96) audit écrou (104) dudit troisième moyen formant actionneur linéaire pour faire aller et venir ladite au moins une tige longue et fine dudit troisième moyen formant actionneur linéaire avec ledit écrou dudit troisième moyen formant actionneur linéaire, et
un moyen (118) pour connecter ladite extrémité extérieure de ladite au moins une tige longue et fine (110, 112) dudit troisième moyen formant actionneur linéaire (96) audit troisième chariot (94) pour faire aller et venir ledit troisième chariot avec de ladite au moins une tige longue et fine dudit troisième moyen formant actionneur linéaire.

10. Dispositif selon l'une quelconque des revendications 4 à 9, dans lequel ledit troisième servomoteur réversible à courant alternatif (98) comporte un arbre de sortie, ledit arbre de sortie dudit troisième servomoteur réversible à courant alternatif (98) étant espacé de et parallèle à un axe de ladite vis (100) dudit troisième moyen formant actionneur linéaire (96) et comprenant en outre un moyen (106) pour transmettre un couple provenant de l'arbre de sortie dudit troisième servomoteur réversible à courant alternatif (98) à ladite vis (100) dudit troisième moyen formant actionneur linéaire (96, 190).

11. Dispositif selon la revendication 10 et comprenant en outre un moyen pour enfermer ledit moyen de transmission de couple.

12. Dispositif selon l'une quelconque des revendications 1 à 11, dans lequel le boîtier (192) dudit troisième moyen formant actionneur linéaire (190) est fixé audit deuxième chariot (76), ledit élément entraîné est une crémaillère (194) dans ledit boîtier (192) dudit troisième moyen formant actionneur linéaire, ladite crémaillère suivant un mouvement de va-et-vient dans ledit boîtier dudit troisième moyen formant actionneur linéaire, et
dans lequel ledit élément d'entraînement est un pignon (198) dans ledit boîtier (192) dudit troisième moyen formant actionneur linéaire, ledit pignon pouvant tourner de manière réversible et se mettre en prise avec ladite crémaillère pour faire aller et venir ladite crémaillère.

13. Dispositif selon l'une quelconque des revendications 1 à 12, dans lequel ledit moyen (22, 44, 46) pour supporter le premier chariot (48) comprend un châssis (22) avec une pluralité espacée de jambes s'étendant verticalement (24, 26, 28, 30) et comprenant en outre un moyen pour ancrer chacune desdites jambes dans un sol (F) situé sous ledit châssis (22).

14. Dispositif selon l'une quelconque des revendications 1 à 13 et comprenant en outre
un bras pousseur (120), et
un moyen formant goupille de cisaillement (152, 154) pour connecter de manière démontable et à pivotement ledit bras pousseur audit troisième chariot (94).

15. Dispositif selon l'une quelconque des revendications 2 à 14 et comprenant en outre un déflecteur de rayonnement fixé audit premier chariot (48).

16. Dispositif selon la revendication 15 et comprenant en outre un déflecteur fixe (180) positionné entre le convoyeur transversal (XC) et lesdits premier et deuxième chariots (48, 76).

17. Dispositif selon l'une quelconque des revendications 3 à 16 dans lequel ledit premier ou deuxième moyen formant actionneur linéaire (50 ; 78) comprend en outre un écran anti-rayonnement (56a) positionné autour dudit boîtier (56 ; 82) et espacé dudit boîtier pour réduire le transfert de chaleur à l'intérieur dudit premier ou deuxième ou troisième moyen formant actionneur linéaire.
